# EUROPÄISCHE PATENTSCHRIFT

(11) **EP 2 691 261 B1**
(45) Veröffentlichungstag und Bekanntmachung des Hinweises auf die Patenterteilung: **08.07.2015**
(21) Anmeldenummer: 12710141.8
(22) Anmeldetag: 15.03.2012
(51) Int. Cl.: B60N 2/56

(54) **BELÜFTUNGSVORRICHTUNG**
VENTILATING DEVICE
DISPOSITIF DE VENTILATION

(30) Priorität: 30.03.2011 DE 102011016136
(43) Veröffentlichungstag der Anmeldung: 05.02.2014
(73) Patentinhaber: ebm-papst St. Georgen GmbH & Co. KG, 78112 St. Georgen (DE)
(72) Erfinder: BERROTH, Hansjörg, 78052 VS-Obereschach (DE)
(74) Vertreter: Raible, Tobias
(86) Internationale Anmeldenummer: PCT/EP2012/001150
(87) Internationale Veröffentlichungsnummer: WO 2012/130395

(56) Entgegenhaltungen:
- WO-A2-02/053411
- DE-A1-102006 054 860
- DE-B3-102005 008 596
- US-A1- 2004 139 758

## Beschreibung

Die Erfindung betrifft eine Belüftungsvorrichtung zur Anordnung am Sitzpolster eines Sitzes, insbesondere eines Fahrzeugsitzes.

Derartige Belüftungsvorrichtungen können zur Belüftung von Sitzen aller Art Anwendung finden und müssen hierbei an einen jeweils verfügbaren Einbauraum angepasst sein. Insbesondere bei Sportwagensitzen ist der jeweils verfügbare Einbauraum jedoch stark einschränkt, sodass in der Regel nur Belüftungsvorrichtungen mit reduzierten Abmessungen Anwendung finden können.

Die DE 10 2006 054 860 A1 zeigt eine Baugruppe für einen Sitz mit einem Kern, bei der Kanäle auf der ersten Seite des Sitzes und ein Lüfter auf der zweiten Seite des Sitzes angeordnet sind, wobei die Kanäle und der Lüfter strömungsverbunden sind. Entweder wird der Kern in eine entsprechend ausgestaltete Vertiefung des Sitzes eingebracht, oder der Kern wird durch den Sitz selbst gebildet. Im Kern sind Durchbrüche zwischen der ersten Seite und der zweiten Seite vorgesehen. Abstandselemente sind gebildet durch eine pultrudierte Spirale, die aus einem Material besteht, welches steifer als das Material des Kerns ist. Die Abstandselemente sind von einer separaten Vliesschicht umhüllt. Die separate Vliesschicht hat Öffnungen, damit abzusaugende oder auszustoßende Luft zwischen der Innenseite und Außenseite der separaten Vliesschicht fließen kann. Die Abstandselemente verlaufen auf der ersten Seite in einem Sammelkanal und tauchen anschließend durch den Kern zur zweiten Seite ab. Auf der zweiten Seite münden die Abstandselemente in einen Verbindungskörper, welcher über Schnappanschlüsse mit dem Lüfter verbunden ist.

Es ist daher eine Aufgabe der Erfindung, eine neue Belüftungsvorrichtung bereit zu stellen.

Diese Aufgabe wird gelöst durch eine Belüftungsvorrichtung gemäß Anspruch 1. Hierbei wird ein von einem Radiallüfter erzeugter Luftstrom mittels einer Luftumlenkeinrichtung umgelenkt und einer Luftverteilungsanordnung zur flächigen Verteilung des umgelenkten Luftstroms zugeführt. In Verbindung mit der Luftumlenkeinrichtung kann somit besonders bei Verwendung eines vergleichsweise großflächigen, langsam drehenden Radiallüfters eine Reduzierung der Gesamtabmessungen der Belüftungsvorrichtung ermöglicht werden.

Bevorzugte Weiterbildungen sind Gegenstand der Unteransprüche.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen. Es zeigt:
- Fig. 1: eine perspektivische Vorderansicht eines mit einer Belüftungsvorrichtung gemäß einer Ausführungsform versehenen Fahrzeugsitzes;
- Fig. 2: eine perspektivische Rückansicht des Fahrzeugsitzes 100 mit der Belüftungsvorrichtung 500 von Fig. 1;
- Fig. 3: eine perspektivische Explosionsdarstellung des Fahrzeugsitzes 100 und der Belüftungsvorrichtung 500 gemäß Fig. 1 und 2;
- Fig. 4: eine Schnittansicht des Fahrzeugsitzes 100 und der Belüftungsvorrichtung 500 von Fig. 1 bis 3; und
- Fig. 5: eine perspektivische Ansicht der Belüftungsvorrichtung 500 von Fig. 1 bis 4.

In der nachfolgenden Beschreibung beziehen sich die Begriffe links, rechts, vorne, hinten, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

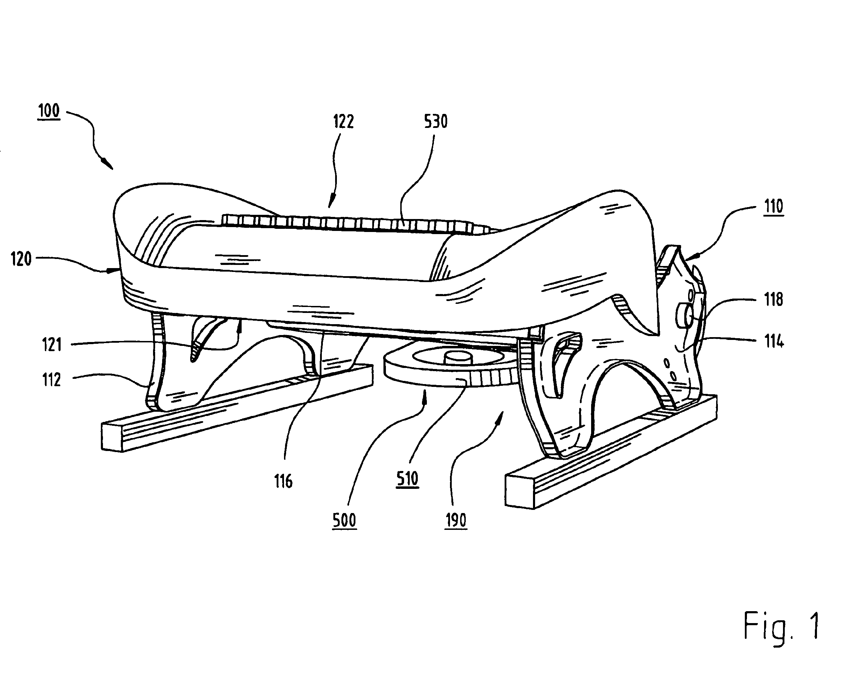

**Fig. 1** zeigt eine Vorderansicht eines beispielhaften Sitzes 100, welcher illustrativ nach Art eines Sportwagensitzes ausgebildet ist und eine Belüftungsvorrichtung 500 gemäß einer Ausführungsform aufweist. Der Fahrzeugsitz 100 hat hier ein Sitzgestell 110, an dem ein Sitzpolster 120 angeordnet ist, welches eine Sitzfläche 122 bildet. Das Sitzgestell 110 hat beispielhaft zwei laterale Stützen 112, 114, die über ein rohr- oder stabförmiges Verbindungselement 118 und eine mäanderförmige Federstruktur 116, auf der eine Unterseite 121 des Sitzpolsters 120 aufliegt, miteinander verbunden sind. Hierbei ist das Sitzpolster 120 derart an dem Sitzgestell 110 angeordnet, dass die Unterseite 121 des Sitzpolsters 120 und das Sitzgestell 110 einen Hohlraum 190 bilden.

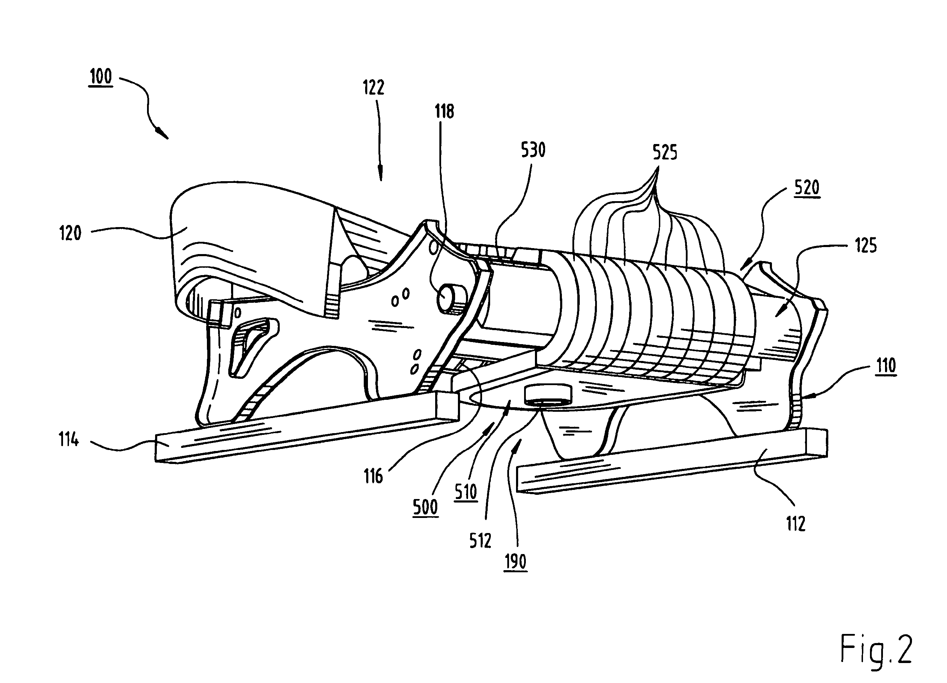

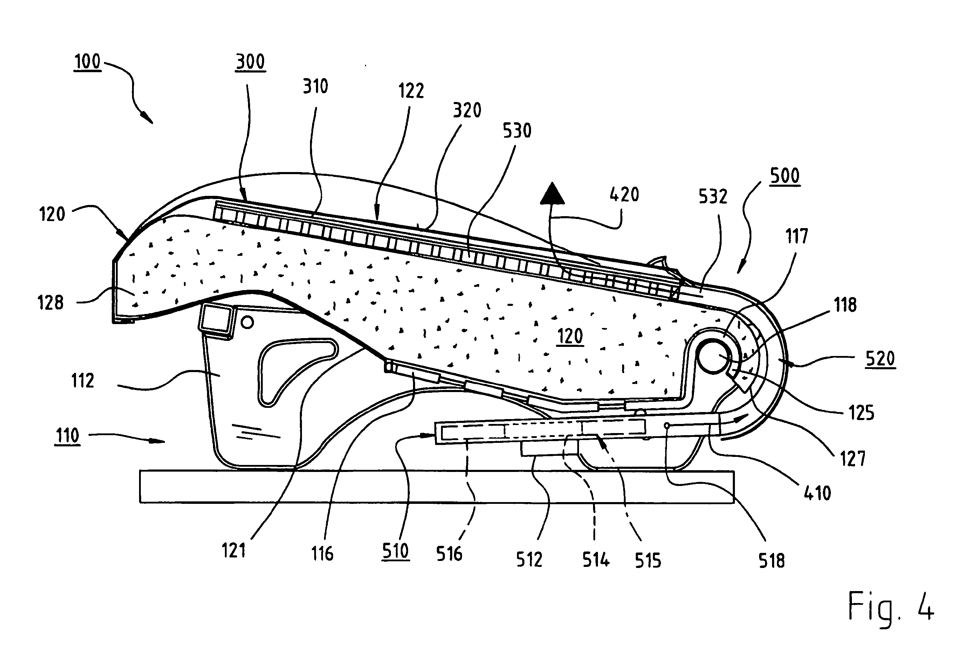

Gemäß einer Ausführungsform dient die Belüftungsvorrichtung 500 zur Belüftung der Sitzfläche 122 und weist ein mit einem Radiallüfter (515 in Fig. 4) versehenes Lüftermodul 510 und eine Luftverteilungsanordnung 530 auf. Diese sind, wie bei Fig. 2 beschrieben, über eine Verbindungsanordnung (520 in Fig. 2) miteinander verbunden. Das Lüftermodul 510 ist bevorzugt flach bauend ausgebildet und beispielhaft in dem Hohlraum 190 im Bereich der Unterseite 121 des Sitzpolsters 120 angeordnet. Die Luftverteilungsanordnung 530 ist auf dem Sitzpolster 120 im Bereich der von diesem ausgebildeten Sitzfläche 122 angeordnet und liegt illustrativ auf dieser auf.

**Fig. 2** zeigt eine Rückansicht des Sitzes 100 von Fig. 1 mit dem auf dem Sitzgestell 110 angeordneten Sitzpolster 120 und der Belüftungsvorrichtung 500. Das Sitzpolster 120 hat ein rückwärtiges Ende 127, welches die von dem Sitzpolster 120 ausgebildete Sitzfläche 122 mit dessen Unterseite 121 verbindet. Im Bereich dieses rückwärtigen Endes 127 ist ein Fixierglied 125 vorgesehen, welches zumindest mittelbar an dem rohr- oder stabförmigen Verbindungselement 118 des Sitzgestells 110 fixiert ist, wie unten bei Fig. 4 beschrieben, um ein Verrutschen des Sitzpolsters 120 relativ zum Sitzgestell 110 zu verhindern.

Gemäß einer Ausführungsform hat das im Bereich der Unterseite 121 des Sitzpolsters 120 in dem vom Sitzpolster 120 und dem Sitzgestell 110 ausgebildeten Hohlraum 190 angeordnete Lüftermodul 510 der Belüftungsvorrichtung 500 einen Einlass 512 und einen Auslass 518. Von diesem Auslass 518 bis zu einem zur Luftzufuhr vorgesehenen Einlass 532 der Luftverteilungsanordnung 530 erstreckt sich eine etwa U-förmige Verbindungsleitung 520 um das rückwärtige Ende 127 des Sitzpolsters 120 herum, welche nachfolgend auch als "Luftumlenkeinrichtung" bezeichnet wird.

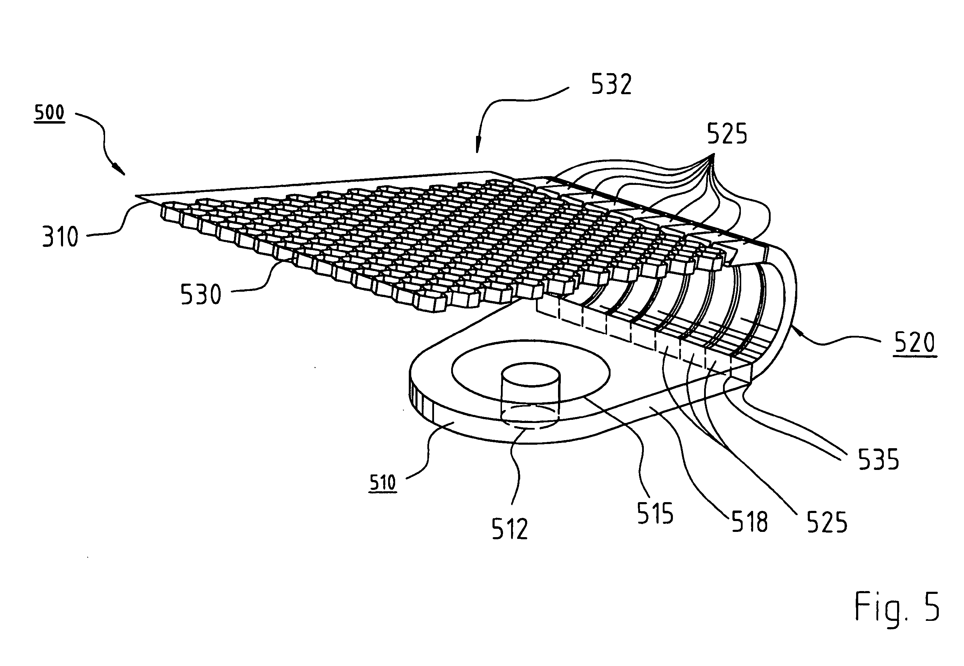

Die Luftumlenkeinrichtung 520 dient zur Umlenkung des vom Lüftermodul 510 erzeugten Luftstroms (410 in Fig. **4**), und die Luftverteilungsanordnung 530 dient zur flächigen Verteilung des von der Luftumlenkeinrichtung 520 umgelenkten Luftstroms 410, wie unten bei Fig. 4 beschrieben. Illustrativ ist die Luftumlenkeinrichtung 520 in einem Bereich, welcher sich im montierten Zustand wie in Fig. 2 gezeigt um das rückwärtige Ende 127 des Sitzpolsters 120 erstreckt, etwa U-förmig ausgebildet. In ihr sind mehrere Luftkanäle 525 angeordnet und mechanisch miteinander verbunden, vgl. Fig. 5. Die Stege 535 zwischen den Kanälen 525 verhindern ein Kollabieren der Kanäle 525 bei Belastung, z.B. durch einen Spannbezug des Sitzes.

Gemäß einer Ausführungsform weist also die Luftumlenkeinrichtung 520 zumindest abschnittsweise nebeneinander über ihre vollständige Erstreckung hinweg eine Mehrzahl von mindestens nahezu parallel zueinander angeordneten Luftkanälen 525 auf, welche nachfolgend auch als "Luftumlenkkanäle" bezeichnet werden. Diese sind mindestens bereichsweise mechanisch miteinander verbunden, wobei zumindest ein Teil der Luftumlenkkanäle 525 jeweils einen etwa rechteckigen Querschnitt hat.

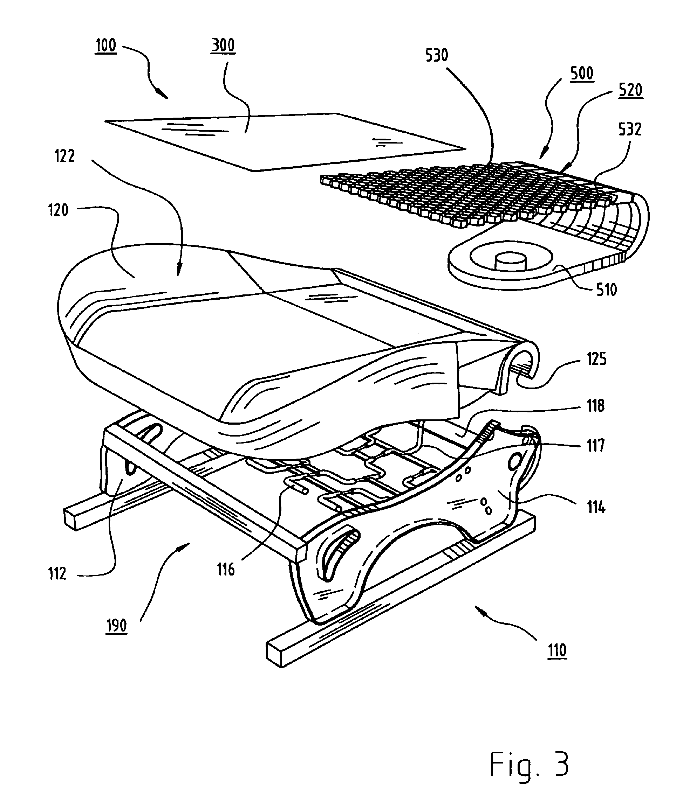

**Fig. 3** zeigt eine beispielhafte Montage des Sitzes 100 von Fig. 1 und 2. Hierbei wird zunächst die mäanderförmige Federstruktur 116 an dem Sitzgestell 110 fixiert, wobei ein am rückwärtigen Ende der Federstruktur 116 vorgesehenes Befestigungsglied 117 an dem rohr- oder stabförmigen Verbindungselement 118 des Sitzgestells 110 befestigt wird. Hierzu ist das Befestigungsglied 117 beispielhaft federnd bogenförmig ausgebildet mit einem Innendurchmesser, welcher kleiner oder gleich dem Außendurchmesser des rohr- oder stabförmigen Verbindungselements 118 ist, so dass das Befestigungslied 117 zur Befestigung auf das Verbindungselement 118 aufgepresst und dort z. B. verrastet werden kann.

Anschließend wird das Sitzpolster 120 an dem Sitzgestell 110 befestigt, wobei die Unterseite 121 des Sitzpolsters 120 auf der mäanderförmigen Federstruktur 116 des Sitzgestells 110 positioniert wird und das im Bereich des rückwärtigen Endes 127 des Sitzpolsters vorgesehene Fixierglied 125 an dem bogenförmigen Befestigungsglied 117 der Federstruktur 116 fixiert wird. Hierzu ist das Fixierglied 125 ebenfalls beispielhaft federnd bogenförmig ausgebildet mit einem Innendurchmesser, welcher kleiner oder gleich dem Außendurchmesser des Befestigungsglieds 117 ist, sodass das Fixierglied 125 zur Befestigung auf das Befestigungsglied 118 aufgepresst und dort z. B. verrastet werden kann.

In einem weiteren Schritt wird die beispielhaft vormontierte Belüftungsvorrichtung 500, bei der am Auslass 518 des Lüftermoduls 510 die am Einlass 532 der Luftverteilungsanordnung 530 befestigte Luftumlenkeinrichtung 520 angeordnet ist, am Sitzpolster 120 angeordnet. Hierzu wird die Belüftungsvorrichtung 500 z. B. derart über das rückwärtige Ende 127 des Sitzpolsters 120 geschoben, dass die Luftumlenkeinrichtung 520 dieses rückwärtige Ende 127 umgreift, wie in Fig. 4 dargestellt.

Die Luftverteilungsanordnung 530 wird auf der Sitzfläche 122 positioniert, und das Lüftermodul 510 wird in dem Hohlraum 190 im Bereich der Unterseite 121 des Sitzpolsters 120 angeordnet.

Gemäß einer Ausführungsform hat die Luftverteilungsanordnung 530 ein textiles Abstandsgewirke. Z. B. kann als Abstandsgewirke das 3mesh®-Abstandsgewirke der Firma Müller Textil GmbH Anwendung finden.

Abschließend kann ein optionales, flächiges Heizelement 300 auf der Luftverteilungsanordnung 530 angeordnet werden. Dieses ist z. B. mit Heizmäandern 310 versehen und luftdurchlässig ausgebildet. Gemäß einer Ausführungsform weist das Heizelement 300 einen luftdurchlässigen Schaum, einen Filz, und/oder ein Vlies auf.

**Fig. 4** zeigt eine Schnittansicht des Sitzes 100 von Fig. 1 mit dem auf dem Sitzgestell 110 angeordneten Sitzpolster 120, welches beispielhaft einen geeigneten Sitzschaum 128 aufweist, und der an dem Sitzpolster 120 angeordneten Belüftungsvorrichtung 500 mit dem Heizelement 300. Fig. 4 verdeutlicht die Verrastung des Befestigungsglieds 117 der mäanderförmigen Federstruktur 116 an dem rohr- oder stabförmigen Verbindungselement 118 des Sitzgestells 110, sowie des Fixierglieds 125 des Sitzpolsters 120 an dem Befestigungsglied 117. Darüber hinaus verdeutlicht Fig. 4 die Funktionsweise der Belüftungsvorrichtung 500, wie nachstehend beschrieben.

Gemäß einer Ausführungsform weist das Lüftermodul 510 einen Radiallüfter 515 auf, welcher schematisch mit einem Lüftermotor 514 und einem Lüfterrad 516 dargestellt ist. Die Luftverteilungsanordnung 530 und das Heizelement 300 werden illustrativ von einem perforierten Abdeckmaterial 499 mit Absorptionslage abgedeckt.

Im Betrieb der Belüftungsvorrichtung 500 wird der Radiallüfter 515 bevorzugt zumindest vergleichsweise langsam drehend betrieben und erzeugt aus Luft, welche durch den Einlass 512 in den Radiallüfter 515 eingesaugt wird, einen Luftstrom 410, welcher über den Auslass 518 des Lüftermoduls 510 der Luftumlenkeinrichtung 520 zugeführt wird. Dort wird der Luftstrom 410 umgelenkt und der Luftverteilungsanordnung 530 über deren Einlass 532 zugeführt. Die Luftverteilungsanordnung 530 verteilt den zugeführten Luftstrom großflächig und ziemlich gleichmäßig über die Sitzfläche 122, wie mit einem Pfeil 420 angedeutet.

**Fig. 5** zeigt die Belüftungsvorrichtung 500 von Fig. 1 bis 4 ohne den Fahrzeugsitz 100. Fig. 5 verdeutlicht den luftdurchlässigen Aufbau der Luftverteilungsanordnung 530 sowie die Anordnung der Luftumlenkkanäle 525 in der Luftumlenkeinrichtung 520.

Naturgemäß sind im Rahmen der vorliegenden Erfindung vielfache Abwandlungen und Modifikationen möglich.

## Patentansprüche

1. Belüftungsvorrichtung (500) zur Anordnung am Sitzpolster (120) eines Sitzes (100), welches Sitzpolster (120) eine Sitzfläche (122) und eine Unterseite (121) aufweist, zwischen welchen ein rückwärtiges Ende (127) des Sitzpolsters (120) angeordnet ist, wobei das Sitzpolster (120) derart an einem dem Sitz (100) zugeordneten Sitzgestell (110) angeordnet ist, dass die Unterseite (121) des Sitzpoisters (120) und das Sitzgestell (110) einen Hohlraum (190) bilden, welche Belüftungsvorrichtung (500) aufweist:
Einen Radlallüfter (515) zur Anordnung In diesem Hohlraum (190) im Bereich der Unterseite (121) des Sitzpolsters (120), welcher Radiallüfter (515) einen Einlass (512) und einen Auslass (518) hat;
eine Luftverteilungsanordnung (530), welche zur Anordnung auf der Sitzfläche (122) des Sitzpolsters (120) ausgebildet ist und einen Einlass (532) zur Luftzufuhr aufweist;
und eine Luftumlenkeinrichtung (520), welche sich vom Auslass (518) des Radiallüfters (515) zum Einlass (532) der Luftverteilungsanordnung (530) erstreckt und mehrere Luftumlenkkanäle (525) aufweist,
welche mindestens bereichsweise mechanisch miteinander verbunden sind,
und zwischen denen Stege (535) angeordnet sind, um ein Kollabieren der Kanäle (525) bei Belastung zu verhindern,
wobei die vormontierte Belüftungsvorrichtung (500), bei der am Auslass (518) des Radiallüfters (515) die am Einlass (532) der Luftvertellungsanordnung (530) befestigte Luftumlenkeinrichtung (520) angeordnet ist, zur Anordnung am Sitzpolster (120) derart über das rückwärtige Ende (127) des Sitzpolsters (120) schiebbar ist, dass die Luftumlenkeinrichtung (520) das rückwärtige Ende (127) umgreift,
wobei die Luftumlenkeinrichtung (520) in einem Bereich, welcher sich im montierten Zustand um das rückwärtige Ende (127) des Sitzpolsters (120) erstreckt, etwa U-förmig ausgebildet ist.

2. Belüftungsvorrichtung nach Anspruch 1, bei welcher zumindest ein Teil der Luftumlenkkanäle (525) jeweils einen etwa rechteckförmigen Querschnitt aufweist.

3. Belüftungsvorrichtung nach einem der vorhergehenden Ansprüche, bei welcher die Luftverteilungsanordnung (530) zur flächigen Luftverteilung im Bereich der Sitzfläche ausgebildet ist.

4. Belüftungsvorrichtung nach einem der vorhergehenden Ansprüche, bei welcher die Luftverteilungsanordnung ein textiles Abstandsgewirke aufweist.

5. Belüftungsvorrichtung nach einem dar vorhergehenden Ansprüche, bei welcher die Luftverteilungsanordnung (530) zur flächigen Verteilung des von der Luftumlenkeinrichtung (520) umgelenkten Luftstroms (410) auf ein flächiges Heizelement (300) ausgebildet ist.

6. Belüftungsvorrichtung nach Anspruch 5, bei welcher das flächige Heizelement (300) einen mit Heizmäandern (310) versehenen, luftdurchlässigen Schaum, Filz, Vlies oder dergleichen aufweist.

## Claims

1. Ventilating device (500) for arrangement on the seat cushion (120) of a seat (100), which seat cushion (120) has a seating surface (122) and an underside (121) between which a rearward end (127) of said seat cushion (120) is arranged, wherein the seat cushion (120) is arranged in such a way, on a seat frame (110) associated with the seat (100), that the underside (121) of said seat cushion (120) and the seat frame (110) form a cavity (190), which ventilating device (500) has:
- a radial fan (515) for arrangement within the said cavity (190) in the region of the underside (121) of the seat cushion (120), which radial fan (515) has an inlet (512) and an outlet (518);
- an air-distributing arrangement (530) which is designed for arrangement on the seating surface (122) of the seat cushion (120) and has an inlet (532) for supplying air;
- and an air-deflecting system (520) which extends from the outlet (518) of the radial fan (515) to the inlet (532) of the air-distributing arrangement (530) and has a number of air-deflecting ducts (525), which are mechanically connected to one another, at least in certain regions, and between which webs (535) are arranged in order to prevent the ducts (525) from collaborating when subjected to load,
wherein the preassembled ventilating device (500), in which the air-deflecting system (520), which is fastened to the inlet (532) of the air-distributing arrangement (530), is arranged at the outlet (518) of the radial fan (515), can be pushed over the rearward end (127) of the seat cushion (120) in such a way, for the purpose of arrangement on said seat cushion (120), that the air-deflecting system (520) engages around said rearward end (127),
and wherein said air-deflecting system (520) is of approximately U-shaped design in a region which extends, in the assembled condition, around the rearward end (127) of the seat cushion (120).

2. Ventilating device according to Claim 1, in which at least part of the air-deflecting ducts (525) has an approximately rectangular cross-section.

3. Ventilating device according to one of the preceding claims, in which the air-distributing arrangement (530) is designed for laminar air distribution in the region of the seating surface.

4. Ventilating device according to one of the preceding claims, in which the air-distributing arrangement has a textile spacer fabric.

5. Ventilating device according to one of the preceding claims, in which the air-distributing arrangement (530) is designed for the laminar distribution, onto a laminar heating element (300), of the air flow (410) which is deflected by the air-deflecting system (520).

6. Ventilating device (500) according to Claim 5, in which the laminar heating element (300) has an air-permeable foam, felt, fleece or the like which is provided with heating meanders (310).

## Revendications

1. Dispositif de ventilation (500) conçu pour être installé sur le rembourrage (120) d'un siège (100), lequel rembourrage (120) comporte une surface d'assise (122) et une face inférieure (121) entre lesquelles une extrémité postérieure (127) dudit rembourrage (120) est interposée, ledit rembourrage (120) occupant, sur un bâti (110) affecté audit siège (100), une position telle que la face inférieure (121) dudit rembourrage (120) et ledit bâti (110) du siège forment une cavité (190),
lequel dispositif de ventilation (500) comprend :
un ventilateur radial (515) conçu pour être logé dans cette cavité (190), dans la région de la face inférieure (121) du rembourrage (120) du siège, lequel ventilateur radial (515) est muni d'une admission (512) et d'une sortie (518) ;
un ensemble (530) répartiteur d'air, réalisé en vue de l'installation sur la surface d'assise (122) dudit rembourrage (120) du siège, et doté d'une admission (532) dévolue à l'arrivée d'air ;
et un système (520) de déflexion d'air, s'étendant depuis la sortie (518) dudit ventilateur radial (515) jusqu'à l'admission (532) dudit ensemble (530) répartiteur d'air, et pourvu de plusieurs canaux (525) déflecteurs d'air
qui sont reliés mécaniquement les uns aux autres, au moins par zones, et entre lesquels des membrures (535) sont interposées afin d'empêcher un écrasement desdits canaux (525) sous l'effet d'une contrainte,
sachant que ledit dispositif de ventilation (500) préassemblé, dans lequel le système (520) de déflexion d'air, fixé à l'admission (532) de l'ensemble (530) répartiteur d'air, est situé à la sortie (518) du ventilateur radial (515), peut être animé d'un coulissement sur l'extrémité postérieure (127) du rembourrage (120) du siège, en vue de l'installation sur ledit rembourrage (120), de façon telle que ledit système (520) de déflexion d'air ceinture ladite extrémité postérieure (127),
ledit système (520) de déflexion d'air étant sensiblement réalisé avec configuration en U dans une région s'étendant, à l'état monté, autour de ladite extrémité postérieure (127) dudit rembourrage (120) du siège.

2. Dispositif de ventilation selon la revendication 1, dans lequel au moins une partie des canaux (525) déflecteurs d'air est pourvue, à chaque fois, d'une section transversale sensiblement rectangulaire.

3. Dispositif de ventilation selon l'une des revendications précédentes, dans lequel l'ensemble (530) répartiteur d'air est réalisé en vue de la répartition d'air sur la superficie, dans la région de la surface d'assise.

4. Dispositif de ventilation selon l'une des revendications précédentes, dans lequel l'ensemble répartiteur d'air présente un textile d'espacement tissé.

5. Dispositif de ventilation selon l'une des revendications précédentes, dans lequel l'ensemble (530) répartiteur d'air est réalisé en vue de la répartition, sur la superficie d'un élément chauffant aplati (300), du courant d'air (410) dévié par le système (520) de déflexion d'air.

6. Dispositif de ventilation selon la revendication 5, dans lequel l'élément chauffant aplati (300) comporte une mousse, un feutre, un non-tissé ou une structure similaire perméable à l'air, doté(e) de méandres chauffants (310).
